Europäisches Patentamt

European Patent Office

Office européen des brevets

(11) Publication number: **0 085 126**
**A1**

## (12) EUROPEAN PATENT APPLICATION

(21) Application number: **82100702.8**

(22) Date of filing: **02.02.82**

(51) Int. Cl.³: **A 61 C 13/22**

(43) Date of publication of application:
**10.08.83 Bulletin 83/32**

(84) Designated Contracting States:
AT BE CH DE FR GB LI LU NL SE

(71) Applicant: **3D -Dental Dinamic Diffusion**
**Via Torleone, 21**
**I-40125 Bologna(IT)**

(72) Inventor: **Gavioli, Carlo**
**Via Eleonora Duse, 16**
**I-40100 Bologna(IT)**

(74) Representative: **Sassatelli, Franco**
**c/o INIP Ufficio Internazionale Brevetti per Deposito di**
**Brevetti e Marchi via Mazzini, 170**
**I-40139 Bologna(IT)**

(54) Dampened connector for a mobile prosthesis.

(57) The connector provides an elastic, detachable junction for a prosthesis. A grooved socket (1), having a slot (19,22) that is formed by two converging walls (18), is fitted to the stationary part. The slot is orientated vertically and opened at its upper end. As a counterpart an elastically retracting pin (9) with an anchoring head (10, 16) is fitted to the removable part of the prothesis. In order to make the connection the anchoring head (10, 16) is placed in the opening of the slot.

By pulling at the mobile part of the prothesis the pin (9) is partly extracted, which allows the passing of a pair of projections (20) at the walls. Releasing of the prothesis engages the connnection tightly in the end (21) of the slot.

FIG 1

- 1 -

"Dampened connector for mobile prothesis to remove by lifting and surpassing with drawing of stopping moulds on the
collar"

The invention refers to a connection for mobile prothesis
which substantially foresees a tying device consisting of
two components, one of which is fixed to the stationary
arcade part and is formed by a collar with an upper intro
duction seat having a corresponding outer couple of stopping moulds for containing the anchored terminal in bonding seat of the other component consisting of a connector
integral with the prothesis.

The connector has longitudinal elastic extensibility admitted for manual drawing which can be carried out by introducing the connector anchoring terminal, on starting,
into the collar guide, while supporting the prothesis, a
nd by drawing it with a view to permitting surpassing, wi
th lowering symmetrical couple of outer retaining projections, in order to let the anchoring body reach the bonding seat.

The longitudinal extensibility can be obtained by overcoming the retention effect of a helical spring which is co
mpressed between a depth regulator, consisting of a coaxial threaded pin on the connector sliding body, and the in side crown containig it. As soon as the traction effect is over, the said spring for retention presses the prothesis on the arcade stationary part to adherence limit permitting the composition of the parts with integral operating bond. Prothesis are currently applied on pilot teeth and to metal parts fixed to arcade.

The present devices foresee assembling also by clutching with upper introduction, but they do not allow a stable anchoring in bonding seat. This because the anchoring body, which is not retained by any lock, can get out of the guide owing to raising due to incidental shocks. To avoid this inconvenience, some devices foresee the mechanical blocking; in this way, the anchoring body is blocked in the bonding seat, but to proceed to its disactivation in order to allow the periodical cleaning operations, mechanical means must be used.

There is to add furthermore that the rigid connection of the two parts leads to unavoidable disconnections.

The invention enables the solution of these problems by means of an apparatus for jonction which allows the connection operating integrally with the use of a dampening means compressing the prothesis on the stationary part of the arcade up to adherence limit, with permanent effect of adjustable pressure.

Another particularity of the invention consists in the fact of foreseeing a stop mould in the bond seat which can be overcome to allow the prothesis to be taken away by means of manual drawing with raising: this condition exludes any disactivation by chance.

An execution version without limitation is shown in the drawings of Table 1, where Fig. 1 is the view of the device composed and showing the anchoring body set in bonding seat. Fig. 2 shows the overcoming phase of the projection couple by means of sliding stem taken out of the connector. Fig. 3 is the prospectic view respectively of the collar that can be applied to the arcade stationary part and bearing sliding body: the centering coaxial, the retaining spring and the extensibility register as well as, outside, the containing cylindrical body completing the part to apply to the prothesis.

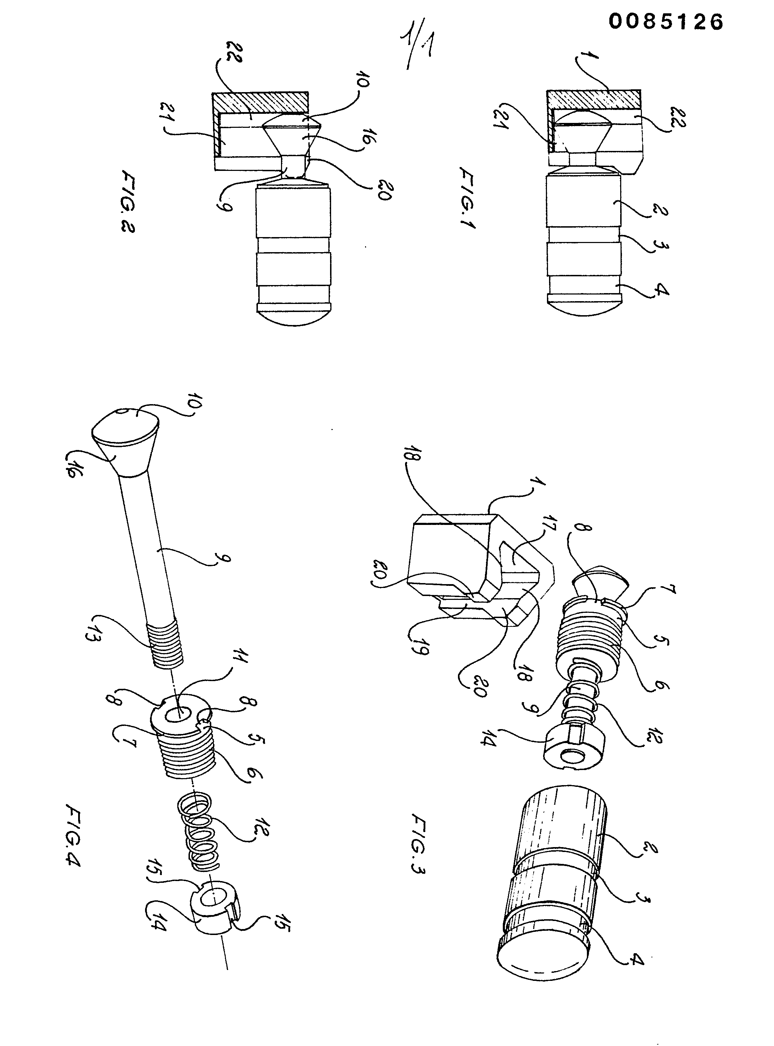

Fig. 4 is the prospectic explosed view of the inner components shown in the previous figure, evidencing the sliding pin having initial threading and anchoring end, the coaxial in which the sliding body runs, the helical retaining spring and the extensibility register. The collar can be fixed with its structure 1 to the arcade stationary part, while the outer body 2 with inner cylindrical cavity of the connector is included in the prothesis by means of soldering resin: this one, setting also in the annular cavities 3 and 4, retains it.

The connector consists of a stationary part consisting of the said containing body 2 and of the sliding coaxial 5 which is applied by means of its threading 6 on the corresponding threading foreseen on the initial inner surface of 2.

Ahead of 5, collar 7 is foreseen which is setting with its inside crown on the border of 2 and opposite cavities 8 apt to allow its disassembling by means of tools. The mobile part consists of pin 9 with anchoring end 10 to be in troduced into coaxial seat 11 of 5 and on which, in succession, retaining spring 12 can be applied and the depth register 14 is screwn on its threaded end 13, to act according to counterposed cavities 15.

For mounting, the prothesis is brought in correspondence to the arcade-part, taking care to insert the conical part 16 of 10 in the introduction opening 17 of the collar keyed on it. With the conical part 16 kept between the converging walls 18 and with the initial part of pin 9 introduced into slit 19, a pull is then made on the prothesis.

The setting into seat is obtained by means of the said pull which brings spring 12 in compression between the opposite crowns of regulator 15 and of coaxial 5 allowing a certain lenght of pin 9 to come out in order to overcome the couple of outer projections 20 of the collar and to reach the bonding seat of 10, by means of sliding in lowering, on the base 21 of the collar.

In particular, the shape of anchoring body 10 with outer conicity is related with the section of the guide consisting of the conversion symmetrical parts 18 and of the ground wall 22 to permit anchoring body 10 to reach its seat by gliding. At the traction end, spring 12 presses the connector on the collar allowing the part assembling, while its damping effect ensures a permanent pressure effect fit for maintaining the composition jointly operating.

In pratice, the execution particulars, the material, the sizes and the fixing systems to the arcades may change.

CLAIMS

1) Dampened connector for mobile prothesis to remove by lifting and surpassing with drawing of stopping moulds on the collar, characterized by the fact that it foresees a two-component bonding device, of which one component is fixed on the stationary arcade parts and consists of a collar with an upper-introduction seat having a pair of outer stopping moulds in correspondence for containing the anchored end of the other component - consisting of a connector integral with the prothesis - in bonding seat.

2) Dampened connector for mobile prothesis to remove by lifting and surpassing with drawing of stopping moulds on the collar, according to the previous claim, characterized by the fact that the connector has longitudinal elastic extensibility allowed by manual drawing: it can be carried out by introducing - suppoting the prothesis - initially the anchoring end of the connector into the collar guide and by drawing to oneself, in order to permit to overcome by lowering a symmetrical couple of outer stop projections to let the anchoring body reach the bonding seat.

3) Dampened connector for mobile prothesis to remove by lifting and surpassing with drawing of stopping moulds on the collar, according to the previous claims, characterized by the fact that the longitudinal extensibility can be obtained by overcoming the retaining effect of the helical spring which is compressed between a depth regulator, consisting of a threaded coaxial pin on the sliding body of the connector, and the inner crown of the containing body.

4) Dampened connector for mobile prothesis to remove by lifting and surpassing with drawing of stopping moulds on the collar, according to the previous claims characterized by the fact that on ceasing the drawing effect, the said retaining spring presses the prothesis on the arcade stationary part to adherence limit enabling the composition of the part with jointly operating bond.

5) Dampened connector for mobile prothesis to remove by lifting and surpassing with drawing of stopping moulds on the collar, according to the previous claims, characterized by the fact that the collar can be fixed with its structure 1 to the arcade stationary part, while outer body 2 with inner cylibdrical cavity of the connector is included in the prothesis by means of soldering resin which sets down also in the annular cavities 3 and 4 and retains the prothesis.

6) Dampened connector for mobile prothesis to remove by lifting and surpassing with drawing of stopping moulds on the collar, according to the previous claims, characterized by the fact that the connector consists of a stationary part formed by the said containig body 2 and by gliding coaxial 5 that is applied by means of its threading foreseen on the initial inner surface of 2. At the beginning of 5, collar 7, is foreseen which is set with its inner crown on the border of 2 and opposite cavities 8 apt to permit its disassembling by means of tools. The mobile part consists of stem 9 with anchring end 10 which can be introduced into the coaxial seat 11 of 5 and on which retaining spring 12 can be successively fitted; on its threaded terminal 13, then the depth regulation 14 is srewed which can be acted on according counterposed cavities 15.

7) Dampened connector for mobile prethesis to remove by lifting and surpassing with drawing of stopping moulds on the collar, according to the previous claims, characterized by the facth that for assembling, the prothesis is brought in corrispondence with the arcade part, taking care to insert conical part 16 of 10 on the introduction opening 17 of the collar keyed on it. With conical part 16 retained between the converging walls 18 and with the initial part of stem 9 introduced into slit 19, a traction is made on the prothesis. The seat can be reached by means of the said drawing which bring spring 12 in compression between the opposite crowns of regular 15 and of coaxial 5, allowing a length of stem 9 to come out fit for passing over the couple of outer projections 20 of the collar and for permitting, in lowering by sliding, to reach the bond seat of 10 on base 21 of the collar.

8) Dampened connector for mobile prothesis to remove by lifting and surpassing with drawing of stopping moulds on the collar, according to the previous claims, characterized by the facth that the form of the anchoring body 10 with outer conicity is in relation to the section of the guide consisting of the conversion symmetric walls 18 and of the ground wall 22 to allow the anchoring body 10 to reach its seat by gliding. At the end of the traction, spring 12 compresses the connector on the collr enabling the part assembly, while its damping effect ensures a permanent pressure effect apt to keep the intefrally operating composition.

9) Dampened connector for mobile prothesis to remove by lifting and surpassing with drawing of stopping moulds on the collar, according to the previous claims, characterized by the fact that regular 14 has an inner threaded cavity to allow changes in its position on the threaded part 13 of the stem with a view to permittint the regulation of the extensebility effect of part 9.

10) Eecution forma as described are illustrated by the dra-

wing of Table 1.

FIG.4

FIG.2

FIG.3

FIG.1

0085126

1/1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A- 790 138 (F.MORANDI) | | A 61 C 13/22 |
| A | CH-A- 312 562 (G.LIPPARINI) | | |
| A | US-A- 399 150 (G.GIOVANNINI) | | |

|  | TECHNICAL FIELDS SEARCHED (Int. Cl. ³) |
|---|---|
|  | A 61 C 13 |

The present search report has been drawn up for all claims

| Place of search THE HAGUE | Date of completion of the search 22-04-1982 | Examiner KOLBE W.H. |
|---|---|---|